# EUROPEAN PATENT SPECIFICATION

(11) **EP 3 388 648 B1**
(45) Date of publication and mention of the grant of the patent: **21.10.2020**
(21) Application number: 18161135.1
(22) Date of filing: 12.03.2018
(51) Int. Cl.: F02C 6/06, F02K 3/075, F04D 27/02

(54) **INLET DUCT**
EINLASSKANAL
CONDUIT D'ENTRÉE

(30) Priority: 11.04.2017 GB 201705802
(43) Date of publication of application: 17.10.2018
(73) Proprietor: Rolls-Royce plc, London N1 9FX (GB)
(72) Inventor: Britchford, Kevin, Derby, Derbyshire DE24 8BJ (GB)
(74) Representative: Rolls-Royce plc

(56) References cited:
- WO-A1-2014/133654
- US-A- 2 362 552
- US-A1- 2016 131 038
- US-A1- 2016 153 363

## Description

The present disclosure concerns an inlet duct, particularly though not exclusively, an inlet duct for a gas turbine engine case cooling system.

Inlet ducts for receiving external air and delivering air to a component are known. Such ducts must often operate in high velocity external air flows, and so may be subject to spill drag. Spill drag is particularly problematic where down-stream restrictions such as valves are provided in the duct, and where the external airflow velocity varies.

One specific example is the Turbine Case Cooling (TCC) duct of an aircraft mounted gas turbine engine. A prior known inlet comprises a flush inlet having a duct extending therefrom, which terminates in a valve. Where the valve is closed, the duct and flush inlet act as a resonator, thereby creating a large amount of tone noise, which may be unacceptable. Inlet scoops are also known, in which a housing extends outwardly from a nominal surface into the external airflow, to thereby direct air into the duct. However, again, such arrangements cause tone noise where airflow through the duct is restricted. Such arrangements are also susceptible to spill drag, which may reduce the efficiency of the aircraft.

A partial solution to these problems is described in US 2015/0369065. This shows a nacelle air scoop having leading edge serrations, which interact with and cancel tone noise produced by the duct. However, the aerodynamic performance of such an arrangement may be poor in view of spill drag.

Further alternative solutions are described in US 6050527 and US 8024935. In each of these documents, a flush inlet is provided with a vane which is either flush to the inlet or projects into the external airflow to direct airflow into the duct. The vane is spaced from both the leading and trailing edges of the flush inlet, to minimise spill drag. However, even these designs are not wholly effective at reducing spill drag or eliminating tone noise.

US patent 2,362,552 discloses an aircraft scoop comprising a large air inlet opening and a substantially smaller outlet opening, which supplies air to an opening beneath the scoop.

US patent publication US2016153363 discloses an air scoop. The air scoop includes a base which is attachable to a nacelle of a turbomachine. An air outlet is defined in the base, and a scoop body is disposed on the base and defines a scoop inlet. The scoop inlet is in fluid communication with the air outlet to supply scoop air to the air outlet. The air scoop also includes separator lip extending from the base to the scoop inlet which spaces the scoop inlet apart from the base to raise the scoop body above liquids streaking along the base. Accordingly, it is an objective of the present disclosure to provide an inlet duct which seeks to address some or all of the above problems.

According to a first aspect there is provided an inlet duct arrangement for a gas turbine engine comprising:
a duct extending from an external fluid flow washed surface into an interior region, the duct having an opening flush with the exterior surface;
a hood extending outwardly of the exterior surface into external fluid flow, and configured to direct external fluid into the duct, the hood comprising an inlet aperture configured to receive external fluid flow, a first outlet aperture configured to communicate with the duct, and a second outlet aperture; wherein
the second outlet aperture is provided outwardly of the external surface and downstream of the inlet aperture, and having a flow area smaller than the flow area of the inlet aperture, characterised in that: the arrangement comprises a flow control valve configured to control mass flow rate through the duct, the valve being provided downstream of the first outlet aperture;
the flow area of the second outlet aperture is between 0.01 and 0.5 times the flow area of the inlet aperture.

Advantageously, by providing a second outlet aperture downstream of the inlet aperture and outwardly of the external surface which has a smaller flow area than the inlet aperture, flow through the second aperture entrains spill flow over the hood, thereby reducing turbulence and so minimising both drag and noise. Consequently, while spill flow is not reduced, drag resulting from spill flow is reduced.

The external surface may comprise an external surface of a gas turbine engine nacelle. The fluid may comprise air. The external surface may comprise a fan nacelle or a core nacelle.

The flow area of the inlet aperture may be between 0.8 and 1.5 times the flow area of the flow control valve in a fully open position. The flow area of the second outlet aperture may be between 0.01 and 0.4 times the flow area of the flow control valve in a fully open position. The flow area of the second outlet aperture is between 0.01 and 0.5 times the flow area of the inlet aperture.

The hood inlet aperture may be defined by a leading edge of the hood. A downstream portion of the leading edge of the hood spaced from the exterior surface may be provided downstream in external flow of an upstream portion of the leading edge located proximate to the external surface. Consequently, the hood leading edge defines a "scarfed" inlet, which is angled upwardly and away from the external surface. Such an arrangement may reduce the spill drag and may be optimal for eliminating the tone noise.

The duct opening may comprise a leading edge upstream of the leading edge of the hood.

The duct opening may define an axial length A, and the hood leading edge may define an axial length B defined by an axial distance between the upstream portion of the leading edge and the downstream portion of the leading edge. A ratio B/A may be between 0.1 and 0.8.

The second outlet aperture may have a smaller area than the first outlet aperture.

The hood may curve inwardly toward the external surface in a downstream direction from the downstream portion of the leading edge of the inlet aperture to the second outlet aperture. A trailing edge of the hood may form the second outlet aperture. The tailing edge of the hood may be upstream of a trailing edge of the duct opening.

According to a second aspect there is provided a gas turbine engine comprising an inlet duct arrangement in accordance with the first aspect.

The gas turbine engine may comprise a turbine case cooling arrangement. The turbine case cooling arrangement may comprise the inlet duct arrangement.

Embodiments will now be described by way of example only, with reference to the Figures, in which:
**Figure 1** is a schematic sectional side view of a gas turbine engine;
**Figure 2** is a schematic sectional side view of part of a turbine case cooling system for the engine of figure 1;
**Figure 3** is a schematic sectional side view of an inlet duct arrangement leading to the turbine case cooling system of figure 2; and
**Figure 4** is a schematic radial view of the inlet duct arrangement of figure 3.

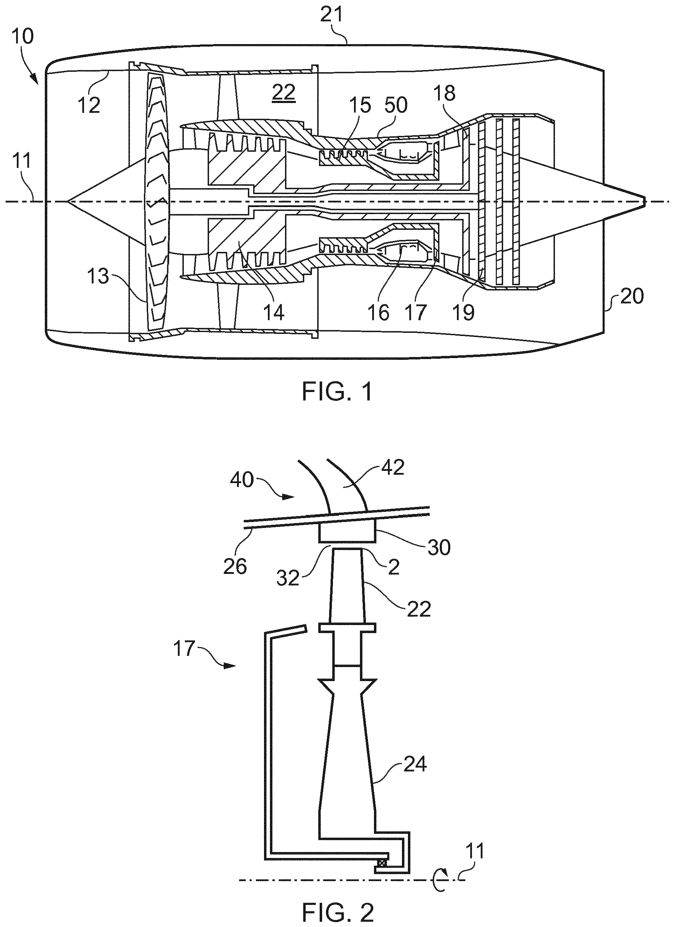

With reference to Figure 1, a gas turbine engine is generally indicated at 10, having a principal and rotational axis 11. The engine 10 comprises, in axial flow series, an air intake 12, a propulsive fan 13, an intermediate pressure compressor 14, a high-pressure compressor 15, combustion equipment 16, a high-pressure turbine 17, an intermediate pressure turbine 18, a low-pressure turbine 19 and an exhaust nozzle 20. A nacelle 21 generally surrounds the engine 10 and defines both the intake 12 and the exhaust nozzle 20.

The gas turbine engine 10 works in the conventional manner so that air entering the intake 12 is accelerated by the fan 13 to produce two air flows: a first air flow into the intermediate pressure compressor 14 and a second air flow which passes through a bypass duct 22 to provide propulsive thrust. The intermediate pressure compressor 14 compresses the airflow directed into it before delivering that air to the high pressure compressor 15 where further compression takes place. The compressors 14, 15, combustor 16 and turbines 16, 17, 19 are housed within an engine core casing 50, which is in turn housed within the nacelle 21.

The compressed air exhausted from the high-pressure compressor 15 is directed into the combustion equipment 16 where it is mixed with fuel and the mixture combusted. The resultant hot combustion products then expand through, and thereby drive the high, intermediate and low-pressure turbines 17, 18, 19 before being exhausted through the nozzle 20 to provide additional propulsive thrust. The high 17, intermediate 18 and low 19 pressure turbines drive respectively the high pressure compressor 15, intermediate pressure compressor 14 and fan 13, each by suitable interconnecting shaft.

Other gas turbine engines to which the present disclosure may be applied may have alternative configurations. By way of example such engines may have an alternative number of interconnecting shafts (e.g. two) and/or an alternative number of compressors and/or turbines. Further the engine may comprise a gearbox provided in the drive train from a turbine to a compressor and/or fan.

Figure 2 shows a section through the high pressure turbine 17 of the engine 10. The high pressure turbine 17 comprises a plurality of turbine rotor blades 22 mounted to a disc 24. The disc 24 and blades 22 rotate about the engine axis 11 when the engine is in operation. The blades 22 are radially surrounded by a turbine casing 26. Between a tip 28 of the blade 22 and the casing 26 is a seal segment assembly 30 which forms a cavity. A gap 32 is defined by a radial distance between the seal segment assembly 30 and the blade tip 28.

In operation, hot gasses impinge on the turbine blade 22, seal segment 30 and a radially inner side of the turbine casing 26. These hot gasses cause these components to expand as the temperature increases, and contract as the temperature decreases. In addition, as the engine accelerates, the rotor 22 lengthens in a radial direction due to centrifugal forces as rotor speeds increase. These thermal and centrifugal effects cause an increase or reduction in the size of the gap 32 as the engine is operated. Since gasses leaking through the gap 32 do not contribute to work conducted by the gas turbine engine, an increase in the size of the gap represents a reduction in engine efficiency. Conversely, a reduction in the size of the gap 32 to zero would imply contact between the blade tip 28 and seal segment 30, which may cause damage to the turbine 17, or at least result in erosion of the tip and / or seal segment 30.

Consequently, the gap 32 is controlled by a case cooling system comprising an inlet duct arrangement 40. The case cooling system comprises the engine casing, seal segment 30, and a cooling air duct 42. The cooling air duct 42 is configured to provide relatively low pressure, cool, external air to the cavity of the seal segment 30, to thereby control thermal expansion of the seal segment 30, and therefore control the gap 32.

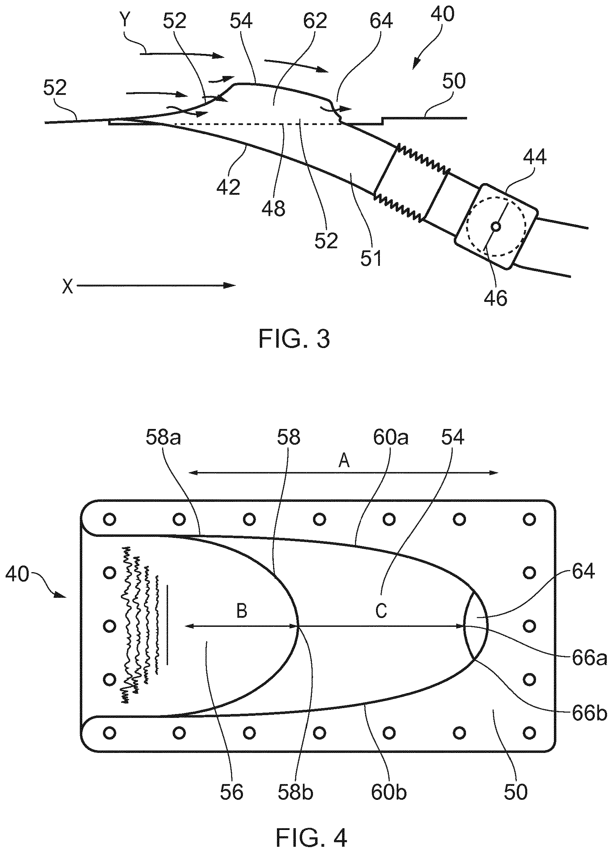

Referring to figures 3 and 4, the inlet duct arrangement 40 further comprises a valve 44 configured to control flow air to the seal segment 30, to thereby control the temperature of the seal segment 30 to control thermal expansion. The valve 44 comprises a butterfly valve comprises a disc 46 provided within a housing. The disc 46 is pivotable from a fully open position to a fully closed or partially closed positions, and optionally also intermediate positions, to control a flow area within the valve 44, to control air flow rate. It will be understood however that other valve types would be suitable.

The duct 42 comprises an opening in the form of a duct air inlet 48, which is generally flush with an external / exterior surface 50, an interior region 51 being defined within the duct walls below the exterior surface 50. The exterior surface 50 comprises an air-washed surface, and in this embodiment, comprises the engine core casing 50. In use, airflow Y from the fan 13 or the relative external airflow from forward aircraft movement extends across the exterior surface in a downstream direction X. The exterior surface 50 defines a notional line 52 which extends across the air inlet 48, such that the air inlet 48 does not project outwardly of the exterior surface 50.

A hood 54 is provided, which extends outwardly from the exterior surface 50 into the exterior airflow Y, and covers at least part of the duct air inlet 48 while being spaced from the notional line 52. External and internal surfaces of the hood 54 are arcuate in a plane extending normally to the downstream direction X and the notional line 48. The hood 54 meets the exterior surface 50 at side edges 60a, 60b, which extend in the downstream direction X, and taper toward each other in the downstream direction.

The hood 54 comprises an air inlet aperture 56 defined by an upstream leading edge 58 of the hood 54. The leading edge 58 of the hood is arcuate in a plane parallel to the notional line 52, and is curved such that a downstream portion of the leading edge 58 at a position 58a spaced furthest from the notional line 52 is downstream relative to a position 58b of an upstream portion of the leading edge 58 where it meets the side edges 60a, 60b. In other words, the hood leading edge 58 defines a "scarfed" inlet, which is angled upwardly and away from the notional surface 52. The hood air inlet 56 defines an air inlet flow area, which is the geometrical area of the inlet 56 in a direction approximately perpendicular to air inlet flow direction.

A geometric relationship of note is the scarfing of the inlet 56 relative to the hood length. The hood length can be defined by a distance (A) parallel to the downstream direction X between the upstream end 58a of the leading edge and the downstream end of a second outlet aperture 64, described in further detail below. Similarly, the distance A also defines an axial length of the duct air inlet 48. The scarfing can in turn be defined in terms of a distance (B) between the upstream end 58a of the leading edge and the downstream end 58b of the leading edge. Consequently, the scarfing relative to the hood length can be defined by the relationship (B) divided by (A). In preferred embodiments, the relationship B/A is between 0.1 and 0.8.

The hood 54 further comprises a first outlet aperture 62 which communicates directly with the inlet 48 of the duct 42. The hood 54 also comprises the second outlet 64, which projects outwardly of the surface 50, and is provided downstream of the inlet 56 of the hood 54. The second outlet 64 is defined by a trailing edge 66a, 66b of the hood 54, which is similarly scarfed upwardly and away from the from the notional surface 52 to define an upstream trailing edge 66a which is spaced from the notional line 50, and a downstream trailing edge 66b, which lies on the notional line 50. The second outlet 64 has a smaller flow area than the air inlet flow area. Typically, the second outlet 64 has a flow area between 0.01 and 0.5 times the flow area of the inlet 56.

A further notable geometric relationship is the scarfing of the second outlet 64. A distance C is defined by the distance parallel to the downstream direction X between the upstream end 58a of the leading edge, and the upstream end of the trailing edge 66a. The distance C divided by the distance A is typically between 0.9 and 1.

Similarly, the flow areas of the inlet 56 and second outlet 64 can be defined in terms of the effective flow area of the valve 44 when in a fully open position. Typically, the flow area of the inlet 56 is between 0.8 and 1.5 times the flow area of the flow control valve 44 in a fully open position, whereas the flow area of the second outlet 64 is between 0.01 and 0.4 times the flow area of the flow control valve 44 in a fully open position.

Referring once more to figure 3, the effect of the inlet duct arrangement during operation is as follows. During operation of the engine 10, airflow is forced over the surface 50 in the downstream direction by the fan 13. With the valve 44 in the fully open position during operation, substantially all airflow that enters the inlet 56 travels into the duct inlet 48 via the first outlet 62, with only a small leakage flow through the second outlet 64.

On the other hand, where the valve 44 is fully or partially closed (as shown in figure 3), air from upstream spills over the leading edge 58 of the hood 54, since not all upstream flow can be accommodated in the duct 42. Ordinarily, this spill air would flow over the external surface of the hood 54 and generate turbulence, which would lead to increased noise and drag. However, in the present invention, this turbulent flow is prevented or reduced by the provision of the second outlet 64.

In figure 3, flow through the hood 54 and over the external surface thereof is represented by arrows Y. As can be seen, a portion of the flow continues to enter the hood through the hood inlet 56, and exits via the second outlet 64. This outlet flow may have a higher velocity than the external airflow, since the relative dimensions of the inlet 56 and second outlet 64, as well as the shape of the hood (which generally narrows in a downstream direction), causes the hood 54 to act as a Venturi device, which accelerates the air that passes through the hood 54 from the inlet 56 to the outlet 64. Consequently, air passing through the outlet 64 is generally at a higher velocity than the spill air that passes over the external surface of the hood 54. This high velocity air entrains the spill air due to the ejector effect, thereby preventing turbulent flow from forming over the external surface of the hood 54, and reducing drag.

Advantageously, a duct arrangement is provided with numerous advantages. The hood acts as a ram air scoop redirecting air into the duct when the valve is open, to provide for more efficient pressure recovery of air entering the duct. The hood also prevents tone noise being generated by the duct. The inlet and second outlets ensure that the duct arrangement can accommodate different flow rates without causing excessive spill drag where the duct flow rate is reduced. This in turn results in reduced aircraft drag and therefore reduced fuel usage.

It will be understood that the invention is not limited to the embodiments above-described and various modifications and improvements can be made without departing from the concepts described herein.

For example, though the inlet duct arrangement has been described in reference to an inlet duct for a turbine case cooling system of a gas turbine engine, the disclosed inlet duct arrangement may be utilised for other purposes. For instance, the inlet duct arrangement may be utilised to provide cooling air for other purposes in a gas turbine engine. Examples include cooling air for electronics and heat exchangers such as compressor intercoolers. Other examples include air for ventilation purposes for interior cavities of the engine. The inlet duct may be used for purposes outside of the field of gas turbine engines. For example, the duct may be utilised in marine applications, where the flow is water rather than air.

## Claims

1. An inlet duct arrangement (40) for a gas turbine engine (10) comprising:
a duct (42) extending from an external fluid flow washed surface (50) into an interior region, the duct (42) having an opening (48) flush with the external surface (50);
a hood (54) extending outwardly of the exterior surface (50) into external fluid flow (Y), and configured to direct external fluid (Y) into the duct (42),
the hood (54) comprising an inlet aperture (56) configured to receive external fluid flow (Y), a first outlet aperture (62) configured to communicate with the duct (42), and a second outlet aperture (64); wherein the second outlet aperture (64) is provided outwardly of the external surface (50) and downstream of the inlet aperture (56), and having a flow area smaller than the flow area of the inlet aperture (56), **characterised in that**: the arrangement comprises a flow control valve (44) configured to control mass flow rate through the duct, the flow control valve (44) being provided downstream of the first outlet aperture;
the flow area of the second outlet aperture (64) is between 0.01 and 0.5 times the flow area of the inlet aperture (56).

2. An inlet duct arrangement according to claim 1, wherein the fluid comprises air.

3. An inlet duct arrangement according to claim 1 or claim 2, wherein the external surface (50) comprises an external surface of a gas turbine engine nacelle (21).

4. An inlet duct arrangement according to claim 3, wherein the external surface (50) comprises a fan nacelle (21) or a core nacelle.

5. An inlet duct arrangement according to any of the preceding claims, wherein the flow area of the inlet aperture (56) is between 0.8 and 1.5 times the flow area of the flow control valve (44) in a fully open position.

6. An inlet duct arrangement according to any of the preceding claims, wherein the flow area of the second outlet aperture (64) is between 0.01 and 0.4 times the flow area of the flow control valve (44) in a fully open position.

7. An inlet duct arrangement according to any of the preceding claims, wherein the first inlet aperture (56) is defined by a leading edge (58) of the hood (54), and wherein a downstream portion (58b) of the leading edge (58) of the hood (54) spaced from the exterior surface (50) is provided downstream in external flow (Y) of a further portion (58a) of the leading edge (58) located proximate to the external surface (50).

8. An inlet duct arrangement according to claim 7, wherein the duct opening (48) defines an axial length (A), and the hood leading edge (58) defines an axial length (B) defined by an axial distance between the upstream portion (58a) of the leading edge (58) and the downstream portion (58b) of the leading edge (58), and wherein a ratio B/A is between 0.1 and 0.8.

9. An inlet duct arrangement according to any of the preceding claims, wherein the second outlet aperture (64) has a smaller area than the first outlet aperture (62).

10. An inlet duct arrangement according to any of the preceding claims, wherein the hood (54) curves inwardly toward the external surface (50) in a downstream direction from the downstream portion (58b) of the leading edge (58) of the inlet aperture (56) to the second outlet aperture (64).

11. An inlet duct arrangement according to any of the preceding claims, wherein a trailing edge (66a, 66b) of the hood (54) forms the second outlet aperture (64), and wherein the tailing edge (66a, 66b) of the hood (56) is upstream of a trailing edge of the duct opening (48).

12. A gas turbine engine (10) comprising an inlet duct arrangement (40) according to any of the preceding claims.

13. A gas turbine engine according to claim 12, wherein the gas turbine engine (10) comprises a turbine case cooling arrangement comprising the inlet duct arrangement (40).

## Patentansprüche

1. Einlasskanalanordnung (40) für ein Gasturbinentriebwerk (10), umfassend:
einen Kanal (42), der sich von einer fluidumströmten Außenfläche (50) in einen Innenbereich erstreckt, wobei der Kanal (42) eine mit der Außenfläche (50) bündige Öffnung (48) aufweist;
eine Haube (54), die sich außerhalb der Außenfläche (50) in externe Fluidströmung (Y) erstreckt und dafür konfiguriert ist, externes Fluid (Y) in den Kanal (42) zu leiten, wobei die Haube (54) eine Einlassapertur (56), die dafür konfiguriert ist, externe Fluidströmung (Y) aufzunehmen, eine erste Auslassapertur (62), die dafür konfiguriert ist, mit dem Kanal (42) zu kommunizieren, und eine zweite Auslassapertur (64) umfasst;
wobei
die zweite Auslassapertur (64) außerhalb der Außenfläche (50) und stromabwärts der Einlassapertur (56) bereitgestellt ist und eine Strömungsfläche, die kleiner als die Strömungsfläche der Einlassapertur (56) ist, aufweist, **dadurch gekennzeichnet, dass**: die Anordnung ein Durchflussregelventil (44) umfasst, das dafür konfiguriert ist, Massendurchsatz durch den Kanal zu steuern, wobei das Durchflussregelventil (44) stromabwärts der ersten Auslassapertur bereitgestellt ist;
die Strömungsfläche der zweiten Auslassapertur (64) zwischen 0,01- und 0,5-mal der Strömungsfläche der Einlassapertur (56) beträgt.

2. Einlasskanalanordnung nach Anspruch 1, wobei das Fluid Luft umfasst.

3. Einlasskanalanordnung nach Anspruch 1 oder Anspruch 2, wobei die Außenfläche (50) eine Außenfläche einer Gasturbinentriebwerksgondel (21) umfasst.

4. Einlasskanalanordnung nach Anspruch 3, wobei die Außenfläche (50) eine Lüftungsgondel (21) oder eine Kerngondel umfasst.

5. Einlasskanalanordnung nach einem der vorhergehenden Ansprüche, wobei die Strömungsfläche der Einlassapertur (56) zwischen 0,8- und 1,5-mal der Strömungsfläche des Durchflussregelventils (44) in einer ganz offenen Stellung beträgt.

6. Einlasskanalanordnung nach einem der vorhergehenden Ansprüche, wobei die Strömungsfläche der zweiten Auslassapertur (64) zwischen 0,01- und 0,4-mal der Strömungsfläche des Durchflussregelventils (44) in einer ganz offenen Stellung beträgt.

7. Einlasskanalanordnung nach einem der vorhergehenden Ansprüche, wobei die erste Einlassapertur (56) von einer Vorderkante (58) der Haube (54) definiert ist und wobei ein Stromabwärtsabschnitt (58b) der Vorderkante (58) der Haube (54) mit Beabstandung von der Außenfläche (50) stromabwärts in externer Strömung (Y) eines weiteren Abschnitts (58a) der Vorderkante (58), die nahe der Außenfläche (50) befindlich ist, bereitgestellt ist.

8. Einlasskanalanordnung nach Anspruch 7, wobei die Kanalöffnung (48) eine Axiallänge (A) definiert und die Haubenvorderkante (58) eine Axiallänge (B) definiert, die von einem Axialabstand zwischen dem Stromaufwärtsabschnitt (58a) der Vorderkante (58) und dem Stromabwärtsabschnitt (58b) der Vorderkante (58) definiert ist, und wobei ein Verhältnis B/A zwischen 0,1 und 0,8 beträgt.

9. Einlasskanalanordnung nach einem der vorhergehenden Ansprüche, wobei die zweite Auslassapertur (64) eine kleinere Fläche als die erste Auslassapertur (62) aufweist.

10. Einlasskanalanordnung nach einem der vorhergehenden Ansprüche, wobei sich die Haube (54) nach innen hin zu der Außenfläche (50) in einer Stromabwärtsrichtung von dem Stromabwärtsabschnitt (58b) der Vorderkante (58) der Einlassapertur (56) zu der zweiten Auslassapertur (64) krümmt.

11. Einlasskanalanordnung nach einem der vorhergehenden Ansprüche, wobei eine Hinterkante (66a, 66b) der Haube (54) die zweite Auslassapertur (64) bildet und wobei die Hinterkante (66a, 66b) der Haube (56) stromaufwärts einer Hinterkante der Kanalöffnung (48) ist.

12. Gasturbinentriebwerk (10) mit einer Einlasskanalanordnung (40) nach einem der vorhergehenden Ansprüche.

13. Gasturbinentriebwerk nach Anspruch 12, wobei das Gasturbinentriebwerk (10) eine die Einlasskanalanordnung (40) umfassende Turbinengehäuse-Kühlungsanordnung umfasst.

## Revendications

1. Agencement de conduit d'entrée (40) pour un moteur à turbine à gaz (10) comprenant :
un conduit (42) s'étendant d'une surface lavée par écoulement de fluide externe (50) dans une région intérieure, le conduit (42) comportant une ouverture (48) affleurant la surface externe (50) ;
un capot (54) s'étendant vers l'extérieur de la surface extérieure (50) dans un écoulement de fluide externe (Y), et conçu pour diriger le fluide externe (Y) dans le conduit (42), le capot (54) comprenant une ouverture d'entrée (56) conçue pour recevoir un écoulement de fluide externe (Y), une première ouverture de sortie (62) conçue pour communiquer avec le conduit (42) et une seconde ouverture de sortie (64) ;
ladite seconde ouverture de sortie (64) étant pourvue vers l'extérieur de la surface externe (50) et en aval de l'ouverture d'entrée (56), et comportant une zone d'écoulement plus petite que la zone d'écoulement de l'ouverture d'entrée (56), **caractérisé en ce que** : l'agencement comprend une soupape de régulation de débit (44) conçue pour réguler le débit massique à travers le conduit, la soupape de régulation de débit (44) étant pourvue en aval de la première ouverture de sortie ;
la zone d'écoulement de la seconde ouverture de sortie (64) représentant entre 0,01 et 0,5 fois la zone d'écoulement de l'ouverture d'entrée (56).

2. Agencement de conduit d'entrée selon la revendication 1, ledit fluide comprenant de l'air.

3. Agencement de conduit d'entrée selon la revendication 1 ou la revendication 2, ladite surface externe (50) comprenant une surface externe d'une nacelle de moteur à turbine à gaz (21).

4. Agencement de conduit d'entrée selon la revendication 3, ladite surface externe (50) comprenant une nacelle de soufflante (21) ou une nacelle centrale.

5. Agencement de conduit d'entrée selon l'une quelconque des revendications précédentes, ladite zone d'écoulement de l'ouverture d'entrée (56) représentant entre 0,8 et 1,5 fois la zone d'écoulement de la soupape de régulation de débit (44) dans une position complètement ouverte.

6. Agencement de conduit d'entrée selon l'une quelconque des revendications précédentes, ladite zone d'écoulement de la seconde ouverture de sortie (64) représentant entre 0,01 et 0,4 fois la zone d'écoulement de la vanne de régulation de débit (44) dans une position complètement ouverte.

7. Agencement de conduit d'entrée selon l'une quelconque des revendications précédentes, ladite première ouverture d'entrée (56) étant définie par un bord d'attaque (58) du capot (54), et une partie aval (58b) du bord d'attaque (58) du capot (54) espacée de la surface extérieure (50) étant pourvue en aval dans le flux externe (Y) d'une autre partie (58a) du bord d'attaque (58) située à proximité de la surface externe (50).

8. Agencement de conduit d'entrée selon la revendication 7, ladite ouverture de conduit (48) définissant une longueur axiale (A) et le bord d'attaque de capot (58) définissant une longueur axiale (B) définie par une distance axiale entre la partie amont (58a) du bord d'attaque (58) et la partie aval (58b) du bord d'attaque (58), et le rapport B/A étant compris entre 0,1 et 0,8.

9. Agencement de conduit d'entrée selon l'une quelconque des revendications précédentes, ladite seconde ouverture de sortie (64) ayant une surface plus petite que la première ouverture de sortie (62).

10. Agencement de conduit d'entrée selon l'une quelconque des revendications précédentes, ledit capot (54) s'incurvant vers l'intérieur en direction de la surface externe (50) dans une direction en aval à partir de la partie aval (58b) du bord d'attaque (58) de l'ouverture d'entrée (56) vers la seconde ouverture de sortie (64).

11. Agencement de conduit d'entrée selon l'une quelconque des revendications précédentes, un bord de fuite (66a, 66b) du capot (54) formant la seconde ouverture de sortie (64), et ledit bord de fuite (66a, 66b) du capot (56) se trouvant en amont d'un bord de fuite de l'ouverture de conduit (48).

12. Moteur à turbine à gaz (10) comprenant un agencement de conduit d'entrée (40) selon l'une quelconque des revendications précédentes.

13. Moteur à turbine à gaz selon la revendication 12, ledit moteur à turbine à gaz (10) comprenant un agencement de refroidissement de carter de turbine comprenant l'agencement de conduit d'entrée (40).
